# FASCICULE DE BREVET EUROPEEN

(11) **EP 1 977 365 B1**
(45) Date de publication et mention de la délivrance du brevet: **20.03.2019**
(21) Numéro de dépôt: 07731520.8
(22) Date de dépôt: 25.01.2007
(51) Int. Cl.: G06F 21/62, G06F 21/10, G06F 17/30

(54) **PROCEDE DE GESTION DE DOCUMENTS ELECTRONIQUES**
ELEKTRONISCHES DOKUMENTENVERWALTUNGSVERFAHREN
ELECTRONIC DOCUMENT MANAGEMENT METHOD

(30) Priorité: 26.01.2006 FR 0650268
(43) Date de publication de la demande: 08.10.2008
(73) Titulaire: Commissariat à l'Énergie Atomique et aux Énergies Alternatives, 75015 Paris (FR)
(72) Inventeur: BROCHARD, Pierre, F-91530 Saint Cheron (FR); COURTAUD, Didier, F-77310 Boissise Le Roi (FR)
(74) Mandataire: Delumeau, François Guy
(86) Numéro de dépôt international: PCT/FR2007/050692
(87) Numéro de publication internationale: WO 2007/085768

(56) Documents cités:
- EP-A- 0 615 192
- EP-A- 1 276 035
- US-A1- 2004 128 556
- DAMIANI E ET AL: "Controlling access to XML documents" IEEE INTERNET COMPUTING IEEE USA, [Online] vol. 5, no. 6, novembre 2001 (2001-11), pages 18-28, XP002438745 ISSN: 1089-7801 Extrait de l'Internet: URL:http://ieeexplore.ieee.org/iel5/4236/2 0897/00968827.pdf?tp=&arnumber=968827&isnu mber=20897> [extrait le 2007-06-21]
- BEISER K: "Getting Grabby: Offline Web Browsing" ONLINE, mars 1997 (1997-03), XP002182809
- POWELL T A ET AL: "HTML Programmer's Reference , APPENDIX A URL PRIMER" HTML PROGRAMMER'S REFERENCE, 1998, pages 355-377, XP002228395
- PATENT ABSTRACTS OF JAPAN vol. 1999, no. 14, 22 décembre 1999 (1999-12-22) & JP 11 242625 A (NIPPON TELEGR & TELEPH CORP <NTT>), 7 septembre 1999 (1999-09-07)

## Description

### Arrière-plan de l'invention

L'invention concerne un procédé de gestion de documents électroniques et un serveur apte à mettre en oeuvre ce procédé.

Dans ce document, on appellera "document" tout ensemble d'informations représentant une unité que l'on peut considérer comme indivisible et complète.

A titre d'exemple non limitatif, un livre, un mémoire, un rapport, une note, un film et un album de musique sont des documents au sens de cette demande de brevet.

Un document peut par exemple être multimédia, c'est le cas d'un film.

On appellera "document électronique" la représentation d'un document sous forme d'une structure de données informatiques pouvant être mémorisées dans la mémoire d'un ordinateur et transmissibles d'un ordinateur à un autre via un réseau de télécommunication.

Un document électronique peut ou non correspondre à un document existant sur un support traditionnel.

L'invention vise plus particulièrement un procédé sécurisé de gestion de documents électroniques permettant d'autoriser ou de restreindre l'accès aux utilisateurs à des parties de ces documents.

Dans ce document, toute partie identifiable d'un document électronique est appelée "champ".

Les champs d'un document électronique sont définis par un administrateur, une personne en charge de la gestion des documents électroniques, ou par tout utilisateur désireux de fournir un document électronique devant être géré par le procédé et le serveur selon l'invention.

Par exemple, un utilisateur peut décider de définir des champs "Titre", "En-tête", "Chapitre" pour un document électronique obtenu par numérisation d'un livre traditionnel.

De même, dans un album de musique, on peut définir des champs pour chacun des morceaux de musique de cet album.

La demande de brevet américaine US2004/0128556 divulgue une technique permettant de contrôler l'accès aux ressources d'un système de fichiers en utilisant des attributs stockés de façon externe à ce système de fichiers. Dans l'état actuel de la technique, on ne connaît pas de procédé de gestion de documents électroniques adapté à gérer des droits d'accès aux parties, c'est-à-dire aux champs, de documents électroniques. En effet, les seuls systèmes de gestion de droits d'accès connus à ce jour définissent des droits applicables à des catégories de document ou aux documents électroniques dans leur intégralité.

### Objet et résumé de l'invention

La présente invention a pour but principal de pallier cet inconvénient.

Plus précisément, elle concerne un procédé de gestion de documents électroniques selon la revendication indépendante 1.

Corrélativement, l'invention concerne un serveur de documents selon la revendication indépendante 4.

On notera tout d'abord que, de façon très avantageuse, les documents électroniques gérés par l'invention ne sont pas modifiés.

En effet, conformément à l'invention, le contrôle d'accès aux documents se fait à partir de l'identifiant de l'utilisateur et des identifiants secrets des champs de ce document, aucun de ces identifiants n'étant mémorisé dans les documents.

Cette caractéristique s'avère fondamentale lorsque le volume de documents à traiter est très important, ou lorsque les documents sont susceptibles d'évoluer dans le temps, par exemple lorsque de nouvelles versions sont disponibles.

On notera également que, de façon très avantageuse, l'utilisateur accède, après vérification des droits, au document lui-même.

L'invention se distingue ainsi des systèmes dans lesquels il est nécessaire de recopier les parties de document autorisées pour un utilisateur donné, dans un fichier temporaire ou permanent limité à ces seules parties, celui-ci pouvant être librement accédé par l'utilisateur.

Conformément à l'invention, chaque champ du document peut être accédé indépendamment des autres, à partir d'un identifiant secret inconnu de l'utilisateur.

Pour que le procédé de gestion de documents et le serveur de documents conformes à l'invention soient fortement sécurisés, il est essentiel que cet identifiant soit effectivement secret. Ceci sous-entend que cet identifiant ne doit pas pouvoir être facilement obtenu de l'utilisateur.

En particulier, tout identifiant obtenu directement par une commande système à partir du nom du document ne peut constituer un identifiant secret au sens de l'invention, puisqu'un utilisateur malintentionné, connaissant cette commande et le nom du document, pourrait accéder à des parties de document auxquelles il n'a pas droit.

Une URL (Uniforme Ressource Location), publique par nature, ne peut donc pas constituer un identifiant secret au sens de l'invention.

Il est également important de noter que, conformément à l'invention, l'identifiant secret est lié à un champ de document.

Il ne s'agit en aucun cas d'un identifiant secret lié à l'utilisateur, tel qu'un mot de passe, indépendant des documents.

Cette caractéristique permet d'offrir une granularité très importante au niveau de la sécurisation, puisque les droits d'accès d'un utilisateur peuvent être vérifiés pour chaque accès à un document, voire même à une partie de document.

Conformément à l'invention, les dispositifs clients ne peuvent pas accéder directement aux documents électroniques, mais doivent interroger le serveur selon l'invention par l'envoi d'une requête du type de celle précitée.

Les utilisateurs peuvent obtenir les documents dans leur intégralité ou seulement des champs de documents, mais dans tous les cas le procédé et le serveur selon l'invention vérifient pour chaque champ du document, si le contenu associé à ce champ (texte, image, son, vidéo, données quelconques dont le type est précise) peut être envoyé à l'utilisateur identifié dans la requête, en fonction de ses droits d'accès propres.

Dans un mode particulier de réalisation, la requête comporte au moins un identifiant public d'un champ du document, et au cours de l'étape d'obtention, l'identifiant secret précité est obtenu à partir de cet identifiant public.

Dans l'exemple mentionné précédemment, l'identifiant public d'un champ peut être l'identifiant "titre" ou "en-tête".

Une telle requête sera émise par le dispositif client lorsque l'utilisateur de ce dispositif souhaite obtenir un ou plusieurs champs du document et non pas le document dans son intégralité.

Dans un mode particulier de réalisation de l'invention, un champ du document comporte au moins un sous-champ et le procédé de gestion selon l'invention comporte une étape de contrôle au cours de laquelle on vérifie, à partir de l'identifiant d'utilisateur et de l'identifiant secret du champ, si le sous-champ doit être traité par le procédé de façon similaire au champ.

Cette caractéristique permet un traitement récursif des documents lorsque des parties de document contiennent des sous-parties.

Conformément à l'invention, des droits d'accès peuvent être définis de sorte que le contenu d'un champ est non accessible à un utilisateur, les contenus des sous-champs de ce champ étant quant à eux accessibles. On dira dans ce cas que le champ est "traversable" mais "non autorisé".

Ainsi, les droits d'accès peuvent être divisés en deux types :
- le droit de traverser un champ donné, c'est-à-dire obtenir la liste des sous-champs inclus dans ce champ sans pour autant fournir le contenu du champ lui-même, les sous-champs pouvant ou non être d'accès autorisé à un utilisateur donné ; et
- le droit d'accéder au contenu d'un champ.

Dans un mode particulier de réalisation, l'étape d'obtention comporte une étape de parcours d'un arbre dont chaque feuille représente un champ du document et comporte une liste des sous-champs compris dans ce champ.

Dans un mode particulier de réalisation, les différentes étapes du procédé de gestion de documents sont déterminées par des instructions de programmes d'ordinateurs.

En conséquence, l'invention vise aussi un programme d'ordinateur sur un support d'informations, ce programme étant susceptible d'être mis en oeuvre dans un serveur ou plus généralement dans un ordinateur, ce programme comportant des instructions adaptées à la mise en oeuvre des étapes d'un procédé de gestion de documents tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, dans son environnement, un serveur conforme à l'invention dans un mode particulier de réalisation ;
- les figures 2A et 2B représentent des structures de données utilisées dans un mode particulier de réalisation de l'invention ;
- la figure 3 représente une requête utilisée dans un mode particulier de réalisation de l'invention ; et
- la figure 4 représente, sous forme d'organigramme, les principales étapes du procédé de gestion de documents électroniques selon l'invention.

### Description détaillée d'un mode de réalisation

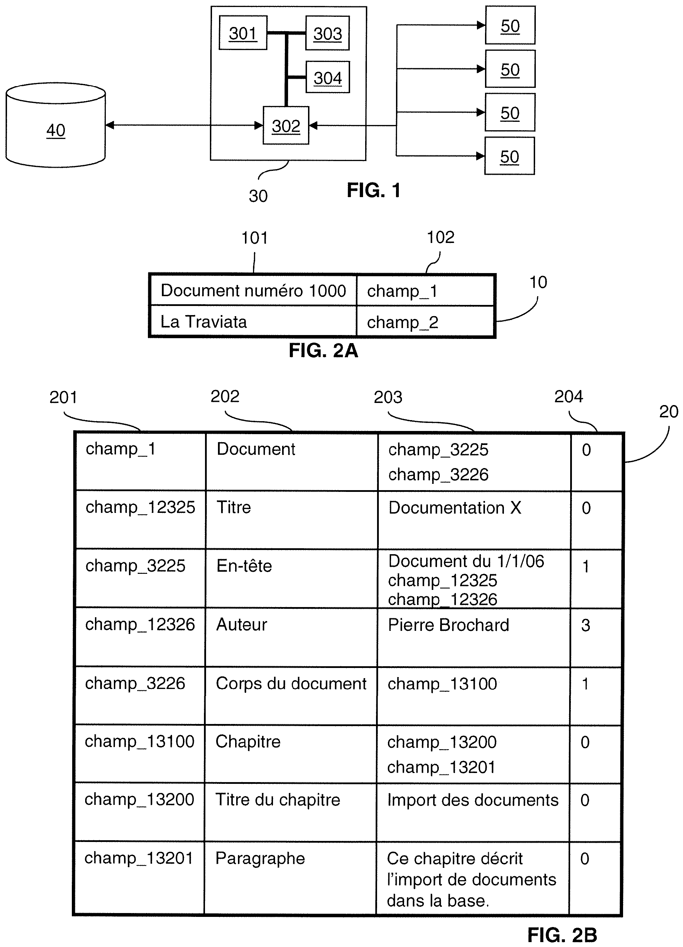

La **figure 1** représente de façon schématique un serveur 30 conforme à l'invention.

Ce serveur 30 a l'architecture matérielle d'un ordinateur classique. Il comporte un processeur 301, une mémoire morte 303 adaptée à contenir des programmes d'ordinateur, une mémoire vive 304 nécessaire à l'exécution de ces programmes d'ordinateur par le processeur 301 et des moyens de communication 302 constitués par une carte réseau et des pilotes logiciels.

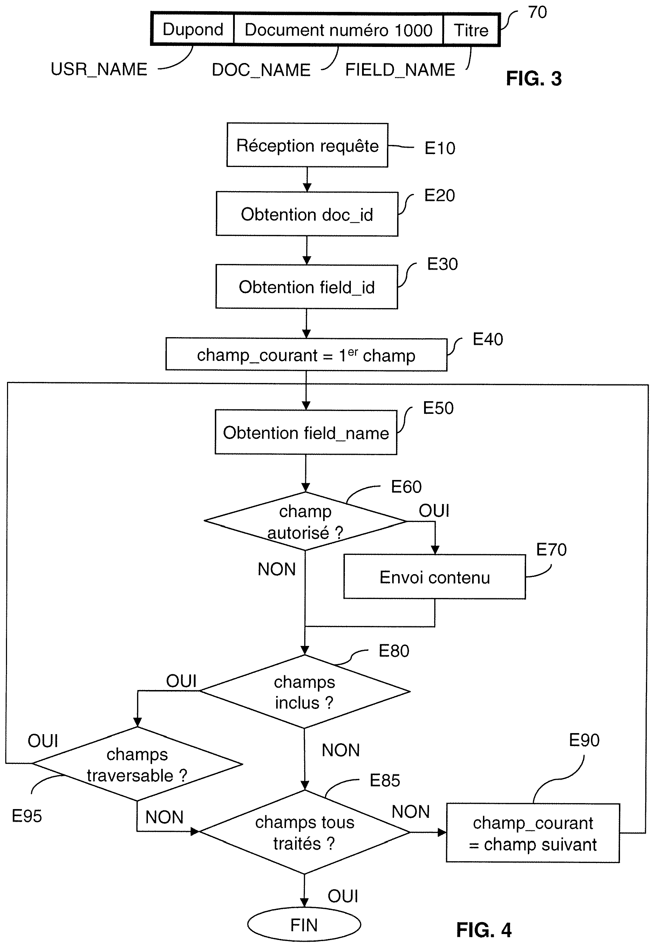

La mémoire morte 303 comporte un programme d'ordinateur conforme à l'invention dont les instructions permettent l'exécution des étapes du procédé de gestion dont l'organigramme est donné à la figure 4.

Dans l'exemple décrit ici, le serveur 30 est relié par un réseau de télécommunication non référencé à une pluralité de dispositifs clients 50. Le réseau de télécommunication reliant le serveur 30 au dispositif client 50 peut être de n'importe quel type et notamment un réseau local de type Ethernet ou un réseau public de type Internet.

Dans l'exemple décrit ici, le serveur 30 accède à une base documentaire 40 comportant un ensemble de documents électroniques.

Nous considérerons dans la suite de la description que cette base documentaire 40 mémorise un document textuel et un document multimédia dont les noms connus des utilisateurs des clients 50 sont respectivement "Document numéro 1000" et "La Traviata".

A la **figure 2A****,** on a représenté une première structure de données 10 comportant une colonne 101 dans laquelle sont mémorisés tous les noms des documents électroniques de la base documentaire 40.

Cette première structure de données 10 comporte une deuxième colonne 102 permettant d'associer à chacun des noms de documents, un identifiant interne unique de ce document, cet identifiant interne étant secret et inconnu des utilisateurs des dispositifs clients 50.

Ainsi, dans l'exemple décrit ici, l'identifiant interne "champ_1" est associé au document de nom "Document numéro 1000" et l'identifiant interne "champ_2" est associé au document de nom "La Traviata".

A l'annexe 1, on a donné le contenu du document électronique de nom "Document numéro 1000". Nous supposerons dans l'exemple décrit ici que plusieurs champs ont été définis pour ce document électronique. Les identifiants publics de ces champs sont "Titre", "En-tête", "Auteur", "Corps du document", "Chapitre", "Titre du chapitre" et "Paragraphe".

A la **figure 2B****,** on a représenté une deuxième structure de données 20 comportant dans une colonne 202 chacun des identifiants publics des champs du document de nom "Document numéro 1000".

Une colonne 201 de cette deuxième structure de données 20 associe, à chacun de ces identifiants publics de champ, un identifiant secret inconnu des utilisateurs des dispositifs clients 50.

A titre d'exemple, le champ d'identifiant public "Titre" est associé à l'identifiant secret "champ_12325".

La deuxième structure de données 20 comporte une troisième colonne 203 dans laquelle on trouve, associé à chacun des champs précités, le contenu de ce champ.

Ce contenu est, dans l'exemple décrit ici, soit du texte, soit une liste de sous-champs.

Par exemple, le contenu du champ d'identifiant public "Titre du chapitre" est le texte "Import des documents".

De même, le contenu du champ d'identifiant public "En-tête" comporte d'une part le texte « Document du 1/1/06 » et d'autre part la liste des sous-champs d'identifiants secrets "champ_12325" et "champ_12326". En se reportant aux deuxième et quatrième lignes de la deuxième structure de données 20, on comprend aisément que le champ "En-tête" regroupe en fait le contenu textuel précité et les champs "Titre" et "Auteur" de contenus respectifs "Documentation X" et "Pierre Brochard".

La quatrième colonne 204 de la deuxième structure de données 20 comporte, pour chacun des champs, une valeur représentative du niveau d'accès de ce champ donné à l'utilisateur de nom "Dupond". Dans cet exemple, ces valeurs peuvent être :
- 0 : champ non autorisé et non traversable ;
- 1 : champ non autorisé et traversable ;
- 2 : champ autorisé et non traversable ; et
- 3 : champ autorisé et traversable.

La **figure 3** représente une requête 70 pouvant être envoyée par un utilisateur du dispositif client 50 au serveur 30 selon l'invention.

Cette requête comprend trois champs :
- le champ USR_NAME qui comporte le nom d'un utilisateur ;
- le champ DOC_NAME qui comporte le nom d'un document électronique ; et
- le champ optionnel FIELD_NAME qui comporte l'identifiant public d'un champ de document.

Dans l'exemple de la figure 3, ces champs comprennent les valeurs respectives "Dupond", "Document numéro 1000", et "Titre".

Lorsque le serveur 30 selon l'invention reçoit cette requête 70, il l'interprète comme une requête émise par un utilisateur du nom de Dupond qui souhaite obtenir uniquement le champ d'identifiant public "Titre" du document de nom "Document numéro 1000".

Le serveur 30 selon l'invention traite cette requête 70 conformément aux étapes du procédé de gestion de documents électroniques conforme à l'invention qui va maintenant être décrit en référence à la **figure 4****.**

Au cours d'une première étape E10, le serveur 30 selon l'invention reçoit cette requête, par les moyens de communication 302.

Cette étape E10 de réception d'une requête est suivie par une étape E20 au cours de laquelle le serveur 30 obtient, à partir de la première structure de données 10, l'identifiant interne associé au nom de document "Document numéro 1000" présent dans le champ DOC_NAME de la requête 70.

Dans l'exemple décrit ici, cet identifiant interne est "champ_1".

Cette étape E20 d'obtention d'un identifiant interne de document est suivie par une étape E30 au cours de laquelle le serveur 30 obtient, en utilisant la deuxième structure de données 20, la liste des identifiants secrets de tous les champs de ce document.

Cette étape, qui se déroule récursivement, revient à parcourir un arbre dont les feuilles sont constituées par les champs de ce document, la racine de cet arbre étant le champ "champ_1" obtenu à l'étape précédente.

Ainsi, à partir de la première ligne de la deuxième structure de données 20, on obtient les champs "champ_3225" et "champ_3226" constituant un premier niveau de cet arbre.

Puis, à partir de la feuille "champ_3225", on obtient, à partir de la troisième ligne de la deuxième structure de données 20, les champs "champ_12325" et "champ_12326" constituant un autre niveau de cet arbre.

En parcourant ainsi toute la deuxième structure de données 20, tous les identifiants secrets des champs sont obtenus.

Cette étape E30 d'obtention est suivie par une boucle de traitement de ces différents champs constituée par les étapes E40 à E95.

Au cours d'une étape E40, on associe à une variable "champ_courant" mémorisée dans la mémoire vive 304, l'identifiant secret du premier champ obtenu à l'étape précédente.

Cette étape E40 est suivie par une étape E50 au cours de laquelle on obtient l'identifiant public associé au champ_courant. Dans l'exemple décrit ici, le premier identifiant secret de champ est "champ_3225" et l'identifiant public de champ associé est "En-tête", obtenu à partir de la troisième ligne de la deuxième structure de données 20.

Cette étape E50 d'obtention de l'identifiant public est suivie par une étape E60 au cours de laquelle on vérifie les droits de l'utilisateur dont le nom est obtenu dans le champ USR_NAME de la requête 70 reçu au cours de la première étape E10 pour ce champ.

En l'espèce, ce champ "En-tête" peut être traversé, mais l'envoi de son contenu n'est pas autorisé, du fait que la colonne 204 de la deuxième structure de données 20 associée au champ "En-tête" contient la valeur 1.

Etant donné que le contenu de ce champ ne peut être envoyé en réponse à la requête 70, le résultat de ce test E60 est négatif. Le contenu textuel « Document du 1/1/06 » n'est donc pas envoyé à l'utilisateur de nom « Dupond ».

Ce test est alors suivi par une étape E80 au cours de laquelle on vérifie si le champ courant comporte des sous-champs.

En l'occurrence c'est le cas et le test E80 est suivi par un test E95 au cours duquel on vérifie si le champ courant est traversable.

En l'occurrence c'est le cas et le procédé selon l'invention retourne à l'étape E50 pour le traitement des sous-champs "champ_12325" et "champ_12326" du champ courant "champ_3225".

Pour chacun de ces sous-champs, on obtient, au cours de cette étape E50, les identifiants publics "Titre" et "Auteur".

Au cours du test E60, déjà décrit, on détermine, par la lecture de la quatrième colonne de la deuxième structure de données 20, que seul le champ "Auteur" est un champ autorisé.

En conséquence, le test E60 est suivi par une étape E70 au cours de laquelle le dispositif client 30 renvoie, en réponse à la requête 70, le contenu du champ "Auteur", à savoir le texte "Pierre Brochard".

L'étape E60 de contrôle pour le sous-champ "Titre" et l'étape E70 de contrôle pour le sous-champ "Auteur" sont suivies par le test E80 au cours duquel on détermine si ces sous-champs contiennent eux-mêmes au moins un sous-champ.

Comme ce n'est pas le cas, pour chacune de ces étapes, le résultat du test E80 est négatif.

Ce test est suivi par une étape E85 au cours de laquelle il est déterminé si tous les sous-champs du champ "champ_3225" ont été traités.

Comme c'est le cas, le procédé de traitement du champ "champ_3225" se termine.

De façon récursive, le procédé traite ensuite le champ "champ_3226" et obtient, au cours de l'étape E50 déjà décrite, l'identifiant public de ce champ, à savoir "Corps du document".

Au cours de l'étape de contrôle E60, il est déterminé que ce champ n'est pas un champ autorisé, la quatrième colonne de la deuxième structure de données 20 comportant la valeur 0.

Ainsi, cette étape E60 de contrôle est suivie par un test E80 au cours duquel on détermine si le champ "Corps du document" comporte des sous-champs.

En l'occurrence c'est le cas puisque le contenu du champ "Corps du document" comporte le sous-champ "champ_13100".

Ce test E80 est alors suivi par le test E95 déjà décrit au cours duquel on détermine si le champ "champ_3226" est traversable.

En l'occurrence ce n'est pas le cas et ce test est suivi par l'étape E85 déjà décrite au cours de laquelle on détermine si tous les champs "champ_3225" et "champ_3226" ont été traités.

Puisque c'est le cas, le procédé de gestion de documents électroniques selon l'invention se termine, dans ce mode particulier de réalisation.

### ANNEXE 1

Document numéro 1000
En-tête : Document du 1/1/06
Titre : Documentation X
Auteur : Pierre Brochard
Corps du document :
Chapitre :
Titre du chapitre : Import des documents
Paragraphe : Ce chapitre décrit l'import de documents dans la base.

## Revendications

1. Procédé de gestion de documents électroniques susceptible d'être mis en oeuvre par un serveur (30) dans un réseau de télécommunications, ce procédé comportant :
- une étape (E10) de réception d'une requête (70) en provenance d'un dispositif client (50), ladite requête (70) comportant au moins un identifiant d'utilisateur (USR_NAME), un nom d'un document électronique (DOC_NAME) et un identifiant public (FIELD_NAME) d'un champ dudit document;
- une étape (E50) d'obtention, à partir dudit nom de document (DOC_NAME) et dudit identifiant public (FIELD_NAME) dudit champ dudit document, d'un identifiant secret (FIELD_ID) dudit champ dudit document
- une étape (E60) de contrôle au cours de laquelle on vérifie, à partir dudit identifiant d'utilisateur (USR_NAME) et dudit identifiant secret (FIELD_ID) dudit champ de document, si un contenu associé audit champ de document peut être envoyé audit dispositif client (50) en réponse à ladite requête (70) ; et le cas échéant
- une étape (E70) d'envoi dudit contenu audit dispositif client (50).

2. Procédé de gestion de documents selon la revendication 1 dans lequel ledit champ comporte au moins un sous champ, **caractérisé en ce qu'**il comporte en outre une étape (E95) de contrôle au cours de laquelle on vérifie, à partir dudit identifiant d'utilisateur (USR_NAME), et de l'identifiant secret (FIELD_ID) dudit champ, si ledit sous-champ doit être traité par ledit procédé de façon similaire audit champ.

3. Procédé de gestion de documents selon la revendication 2, **caractérisé en ce que** ladite étape (E50) d'obtention comporte une étape de parcours d'un arbre dont chaque feuille représente un champ dudit document et comporte une liste des sous-champs compris dans ce champ.

4. Serveur de documents comportant :
- des moyens (302) de réception d'une requête (70) en provenance d'un dispositif client (50), ladite requête (70) comportant au moins un identifiant d'utilisateur (USR_NAME), un nom d'un document électronique (DOC_NAME) et un identifiant public (FIELD_NAME) d'un champ dudit document;
- des moyens (301) d'obtention, à partir dudit nom de document (DOC_NAME) et dudit identifiant public (FIELD_NAME) dudit champ dudit document, d'un identifiant secret dudit champ dudit document
- des moyens (301) de contrôle adaptés à vérifier, à partir dudit identifiant d'utilisateur (USR_NAME) et dudit identifiant secret (FIELD_ID) dudit champ de document, si un contenu associé audit champ de document peut être envoyé audit dispositif client (50) en réponse à ladite requête (70) ; et
- des moyens (302) d'envoi dudit contenu audit dispositif client (50).

5. Programme d'ordinateur comportant des instructions pour l'exécution des étapes du procédé de gestion de documents selon l'une quelconque des revendications 1 à 3 lorsque ledit programme est exécuté par un ordinateur.

6. Support d'enregistrement (303) lisible par un ordinateur (30) sur lequel est enregistré un programme d'ordinateur comprenant des instructions pour l'exécution des étapes du procédé de gestion de documents selon l'une quelconque des revendications 1 à 3.

## Patentansprüche

1. Verfahren zum Verwalten von elektronischen Dokumenten, das von einem Server (30) in einem Telekommunikationsnetz umgesetzt werden kann, wobei das Verfahren aufweist:
- einen Schritt (E10) des Empfangens einer Anfrage (70) von einer Client-Vorrichtung (50), wobei die Anfrage (70) mindestens eine Benutzerkennung (USR_NAME), einen Namen eines elektronischen Dokuments (DOC_NAME) und eine öffentliche Kennung (FIELD_NAME) eines Feldes des Dokuments aufweist,
- einen Schritt (E50) des Erhaltens aus dem Namen des Dokuments (DOC_NAME) und aus der öffentlichen Kennung (FIELD_NAME) des Feldes des Dokuments einer geheimen Kennung (FIELD_ID) des Feldes des Dokuments,
- einen Schritt (E60) des Kontrollierens, bei dem ausgehend von der Benutzerkennung (USR_NAME) und der geheimen Kennung (FIELD_ID) des Feldes des Dokuments überprüft wird, ob ein Inhalt, der mit dem Feld des Dokumentes verbunden ist, als Antwort auf die Anfrage (70) an die Client-Vorrichtung (50) gesendet werden kann, und gegebenenfalls
- einen Schritt (E70) des Sendens des Inhalts an die Client-Vorrichtung (50).

2. Verfahren zum Verwalten von Dokumenten nach Anspruch 1, wobei das Feld mindestens ein Unterfeld aufweist, **dadurch gekennzeichnet, dass** es ferner einen Schritt (E95) des Kontrollierens aufweist, bei dem ausgehend von der Benutzerkennung (USR_NAME) und der geheimen Kennung (FIELD_ID) des Feldes überprüft wird, ob das Unterfeld von dem Verfahren auf die gleiche Weise wie das Feld verarbeitet werden muss.

3. Verfahren zum Verwalten von Dokumenten nach Anspruch 2, **dadurch gekennzeichnet, dass** der Schritt (E50) des Erhaltens einen Schritt des Durchlaufens eines Baums aufweist, wovon jedes Blatt ein Feld des Dokuments darstellt und eine Liste der Unterfelder aufweist, die in diesem Feld enthalten sind.

4. Dokumentenserver, umfassend:
- Mittel (302) zum Empfangen einer Anfrage (70) von einer Client-Vorrichtung (50), wobei die Anfrage (70) mindestens eine Benutzerkennung (USR_NAME), einen Namen eines elektronischen Dokuments (DOC_NAME) und eine öffentliche Kennung (FIELD_NAME) eines Feldes des Dokuments aufweist,
- Mittel (301) zum Erhalten aus dem Namen des Dokuments (DOC_NAME) und aus der öffentlichen Kennung (FIELD_NAME) des Feldes des Dokuments einer geheimen Kennung des Feldes des Dokuments,
- Mittel (301) zum Kontrollieren, die geeignet sind, ausgehend von der Benutzerkennung (USR_NAME) und der geheimen Kennung (FIELD_ID) des Feldes des Dokuments zu überprüfen, ob ein Inhalt, der mit dem Feld des Dokumentes verbunden ist, als Antwort auf die Anfrage (70) an die Client-Vorrichtung (50) gesendet werden kann, und
- Mittel (302) zum Senden des Inhalts an die Client-Vorrichtung (50).

5. Computerprogramm, das Anweisungen für das Ausführen der Schritte des Verfahrens zum Verwalten von Dokumenten gemäß einem der Ansprüche 1 bis 3 aufweist, wenn das Programm von einem Computer ausgeführt wird.

6. Aufzeichnungsmedium (303), das von einem Computer (30) lesbar ist, auf dem ein Computerprogramm aufgezeichnet ist, das Anweisungen für die Ausführung der Schritte des Verfahrens zum Verwalten von Dokumenten gemäß einem der Ansprüche 1 bis 3 aufweist.

## Claims

1. A method of managing electronic documents suitable for implementation by a server (30) in a telecommunications network, the method comprising:
• a receiving step (E10) of receiving a request (70) coming from a client device (50), said request (70) containing at least a user identifier (USR_NAME), an electronic document name (DOC_NAME) and a public identifier (FIELD_NAME) of a field of said document;
• an obtaining step (E50) of obtaining from said document name (DOC_NAME) and said public identifier (FIELD_NAME) of said field of said document a secret identifier (FIELD_ID) of said field of said document;
• a checking step (E60) of verifying from said user identifier (USR_NAME) and from said secret identifier (FIELD_ID) of said field of document whether a content associated with said field of document may be sent to the client device (50) in response to said request (70); and where applicable
• a sending step (E70) of sending said content to said client device (50).

2. A document management method according to claim 1 in which said field contains at least one sub-field, the method being **characterized in that** it further comprises a checking step (E95) of verifying from said user identifier (USR_NAME) and from the secret identifier (FIELD_ID) of said field, whether said sub-field is to be processed by said method in a manner similar to said field.

3. A document management method according to claim 2, **characterized in that** said obtaining step (E50) comprises a step of parsing a tree in which each leaf represents a field of said document and includes a list of sub-fields contained in said field.

4. A document server comprising:
• receiving means (302) for receiving a request (70) coming from a client device (50), said request (70) containing at least a user identifier (USR_NAME), an electronic communications name (DOC_NAME) and a public identifier (FIELD_NAME) of a field of said document;
• obtaining means (301) for obtaining from said document name (DOC_NAME) and said public identifier (FIELD_NAME) of said field of said document, a secret identifier of said field of said document;
• checking means (301) suitable for verifying from said user identifier (USR_NAME) and from said secret identifier (FIELD_ID) of said field of said document, whether a content associated with said field of document may be sent to said client device (50) in response to said request (70); and
• sending means (302) for sending said content to said client device (50).

5. A computer program including instructions for executing the steps of the document management method according to any one of claims 1 to 3 when said program is executed by a computer.

6. A recording medium (303) readable by a computer (30) and having recorded thereon a computer program including instructions for executing the steps of the document management method according to any one of claims 1 to 3.
